# EUROPEAN PATENT APPLICATION

(11) **EP 1 703 518 A1**
(43) Date of publication of application: **20.09.2006**
(21) Application number: 06075495.9
(22) Date of filing: 03.03.2006
(51) Int. Cl.: G11B 27/34, G11B 20/12, G11B 20/10

(54) **Accessing a mixed-mode storage medium**

(30) Priority: 16.03.2005 US 81113
(71) Applicant: Delphi Technologies, Inc., Troy, MI 48007 (US)
(72) Inventor: Toms, Mona L., Carmel, IN 46032 (US); Mitchell, Gary K., Kokomo, IN 46901 (US)
(74) Representative: Denton, Michael John

(57) **Abstract**

A system and method is provided to access and structure a mixed-mode storage medium (100) having both audio (210) and data formats (220). The medium contents, including audio track and data file information, are read following disc presentation to a media player. The media player is initialized to prepare it to sequentially access and play audio format (210) and data format (220) (in any order), without having to reinitialize when changing between the audio (210) and data formats (220). In an aspect, audio tracks are incorporated into a folder structure for display purposes. The audio tracks can be incorporated into an existing folder, a newly-created folder, a folder with data files, a folder without data files, or a combination thereof. The present invention facilitates making a CD unambiguous to read and navigate. Both the audio contents and the data contents of a disc can be displayed upfront without having to engage a format mode change button.

## Description

### FIELD OF THE INVENTION

The invention relates generally to accessing a digital storage medium, and more particularly to structuring and accessing a compact disc having both audio and data file formats.

### BACKGROUND OF THE INVENTION

Compact discs, made available to the public in early 1980, are widely used today and have proven to be a versatile carrier of information. A compact disc (CD) is a polycarbonate with one or more metal layers capable of storing digital information. The compact disc is read by an optical scanning mechanism that uses a high-intensity light source, such as a laser, and mirrors. The most prevalent types of compact discs are those used by the music industry to store digital recordings and CD-ROMs used to store computer data. The CD-ROM market currently embraces internal, external and portable drives, caddy and tray loading mechanisms, single-disc and multi-disc changer units, SCSI and EIDE interfaces, and a plethora of standards.

Compact disc players are now capable of playing CDs that contain both audio (CD-DA) files and MP3 files that were recorded on a single CD. The recording is accomplished by one of several methods. A conventional single session mixed-mode CD may be created using mixed-mode CD recording software. Data is typically written in a CD-ROM or CD-ROM XA format to a CD track. The data track is typically recorded as the first track, while the audio tracks follow and are recorded as tracks 2-xx, where xx is a number up to 99. Alternatively, the disc may be created during multiple sessions using conventional CD recording software that allows only one format to be recorded in a given recording session. This is known as a multi-session disc. On a multi-session mixed-mode CD, audio tracks and data tracks can be recorded in any order as long as the number of total sessions and number of total tracks do not exceed CD standards specifications such as directed by the Red Book or Yellow Book. As a further alternative, an enhanced CD format can be used. Enhanced CDs contain a number of audio tracks followed by a single data track. Finally, other methods to record both audio tracks and data tracks on a single CD additionally exist.

Since a mixed-mode CD player can access files and tracks having different formats, an operator of a CD player is not required to change discs for songs having different file formats. However, while a mixed-mode CD player can read both file formats, an operator of a CD player must manually switch modes between MP3 and CD-DA formats. For example, with a Pioneer DEH-P4500MP player or a Phillips EX401, an operator of a CD player must press the Band button to switch between the two formats. This type of interface makes song track navigation cumbersome because an operator of a CD player must first recall the recording format of song file/track (audio or data), identify the current mode of the CD player, and then switch to the correct mode should the CD player be in a different mode. For in-vehicle CD players, mode switching is cumbersome and distracts a driver's attention away from operating a vehicle. Additionally, when switching between a CD-DA mode and a compressed audio mode, a CD player must reinitialize, which can cause a significant delay of five to fifteen seconds or more in audio output.

### SUMMARY OF THE INVENTION

A system and method is provided to access a mixed-mode storage medium, having both audio and data formats. Applicable storage media include a compact disc, DVD, hard drive, mini disc, and a digital tape. In an embodiment, the present invention provides a seamless interface between audio files and data files on a single compact disc. Audio time delay, which is a consequence of a CD having to reinitialize when switching format modes, is essentially eliminated by the present invention when switching between audio and data formats.

After reading a CD, audio track and data file information is concurrently obtained and can be displayed including number of tracks, location of a track and length of a track. The present invention facilitates making a CD unambiguous to read and navigate. Both the audio contents and the data contents of a disc are located and can be displayed upfront without having to perform a mode change. A mode change button is often used by current systems to change from audio tracks to data files. As provided by the present invention, an operator of a CD player can switch between audio format and MP3 format modes (or another compressed audio format) when playing mixed-mode CDs, without having to manually engage a mode change button. Further, the present invention enables an operator of a CD player to randomize the play of both the audio tracks and data files on a single CD.

Features of the invention are achieved in part by reading the file structures of the storage medium and the medium contents including audio track information and data file information following disc presentation to a media player. The media player is initialized to prepare it to sequentially access and play audio format and data format (in either order), without having to reinitialize the media player when changing between the audio and data formats.

Further, comparable to data files, audio tracks are incorporated into a folder structure for display purposes. The audio tracks can be incorporated into an existing folder, a newly-created folder, a folder with data files, a folder without data files, or a combination thereof. As an example, an operator of a CD player is presented with a display of folders having both audio track and data file information, eliminating the necessity of having to initialize the CD player for a different file format when viewing different file formats.

Other features and advantages of this invention will be apparent to a person of skill in the art who studies the invention disclosure. Therefore, the scope of the invention will be better understood by reference to an example of an embodiment, given with respect to the following figures.

### BRIEF DESCRIPTION OF THE DRAWINGS

The foregoing aspects and many of the attendant advantages of this invention will become more readily appreciated by reference to the following detailed description, when taken in conjunction with the accompanying drawings, wherein:
FIG. 1 is a perspective view of a compact disc including both audio tracks and data files thereon, in which the present invention can be useful;
FIG. 2 is a diagrammatic view illustrating the contents of the audio tracks and data files on the physical disc, as in FIG. 1;
FIG. 3A is a diagrammatic view illustrating the CD contents of FIG. 2 as shown to an operator of a CD player when the CD player is in an audio track playing mode, in a prior art example;
FIG. 3B is a diagrammatic view illustrating the CD contents of FIG. 2 as shown to an operator of a CD player when the CD player is in a data file playing mode, in a prior art example;
FIG. 4 is a diagrammatic view illustrating the CD contents of FIG. 2 as shown to an operator of a CD player, in accordance with an embodiment of the present invention; and
FIG. 5 is a diagrammatic view of an example CD display showing an audio track that is situated into a folder structure presenting audio file information, in accordance with an embodiment of the present invention.

### DETAILED DESCRIPTION OF THE INVENTION

Exemplary embodiments are described with reference to specific configurations. Those of ordinary skill in the art will appreciate that various changes and modifications can be made while remaining within the scope of the appended claims. Additionally, well-known elements, devices, components, methods, process steps and the like may not be set forth in detail in order to avoid obscuring the present invention.

A system and method is described herein to provide access to a mixed-mode storage medium, having both audio and data formats, using a media player. The present invention is discussed with reference to a compact disc and a compact disc player. However, it is to be appreciated the present invention has applications beyond this example, and can be employed with other storage media and media players. Applicable storage media that can be employed with the present invention include a compact disc, DVD, hard drive, mini disc, and a digital tape. An applicable media player that can be employed with the present invention includes a compact disc player, DVD player, computer having a hard drive, mini disc player, and a computer having a digital tape. It is to be appreciated that a media player also includes a media device that can perform additional or other functions in addition to playing, including copying, editing and recording.

Further, the present invention is discussed with reference to audio tracks and data files. The audio files as discussed herein include CD-DA, and the data files are a compressed audio format including MP3, MP3Pro, WMA, AAC, ATRAC, and Ogg-Vorbis. It is to be appreciated that other audio and data files exist and can be similarly utilized with the present invention. For a mixed-mode CD, data files are typically written in a CD-ROM or CD-ROM XA format to a CD track. MP3 files are used as an example herein for simplicity since it is a well-known compressed audio format. MP3 denotes MPEG-1 layer 3 compression codec, MPEG denotes Motion Picture Expert Group, and Codec denotes encoder/decoder. Research for this code was initially for video compression but it also applies to audio compression. Compressed audio files require fewer bits to encode as compared to standard CD-DA audio, as defined in the CD Red Book specification. Given the typical compression rate for most of the commonly used compressed audio encoders, compressed audio files result in storage for about ten hours of music on a single compact disc as compared with about one hour for a standard music CD (CD-DA). Thus, compressed audio files are employed with CDs. The CD Red Book is a widely known CD standard that describes the physical properties of a compact disc and digital audio encoding. There are other colored books (i.e., yellow, orange, green, etc.) that describe CD ROM format discs, multi-session discs, enhanced CDs, etc. These CD specifications were created by the CD consortium including Sony, Philips and others and are widely known in the compact disc industry.

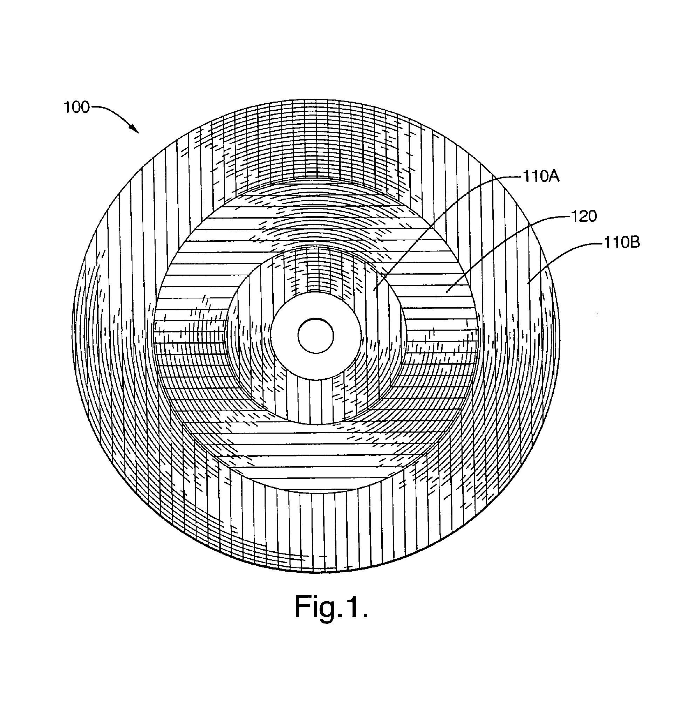

Referring to the drawings wherein identical reference numerals denote the same elements throughout the various views, **FIG. 1** is a perspective view of a mixed-mode compact disc. This illustration shows one of the many possible disc storage configurations as described above, including both audio tracks and data tracks on a single CD. That is, the audio files and data files may be stored on a single CD in any order or stored in a number of ways. CD 100 includes, on the physical disc, audio tracks sector 110A, data files sector 120 and audio tracks sector 110B. It is to be appreciated that audio tracks can be split up in the disc as illustrated in FIG. 1. In this example, the audio tracks are CD-DA format and the data files are MP3 format. As previously discussed, many compact disc players are capable of playing CDs that contain both audio (CD-DA) files and MP3 files. However, while a mixed-mode CD player can read both file formats, an operator of a CD player must manually switch modes between the MP3 and CD-DA formats to access a particular format. Additionally, when switching between a CD-DA mode and a compressed audio mode, a CD player must reinitialize, which can cause a significant delay in audio output. Initializing a media player as used herein is defined as preparing the media player for data in a certain file system format.

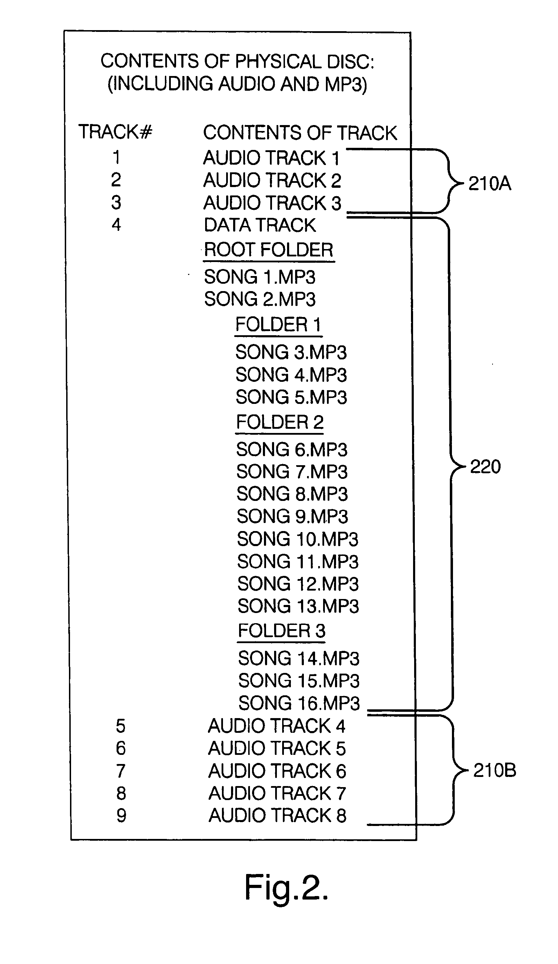

**FIG. 2** is a diagrammatic view illustrating the contents of the audio tracks 210 and data files 220 on the physical disc of FIG. 1. In this example, audio track 1, audio track 2 and audio track 3 are denoted as audio tracks 210A. These audio tracks 210A are written in CD-DA format and are recorded on audio tracks sector 110A of FIG. 1. Data track 4 including root folder, folder 1, folder 2 and folder 3 are denoted as data tracks 220. Root folder includes song 1 and song 2, folder 1 includes songs 3-5, folder 2 includes songs 6-13 and folder 3 includes songs 14-16. These data tracks 220 are written in MP3 format and are recorded on data files sector 120 of FIG. 1. Finally, audio track 4, audio track 5, audio track 6, audio track 7 and audio track 8 are denoted as audio tracks 210B. These tracks 210B are written in CD-DA format and are recorded on audio tracks sector 110B of FIG. 1.

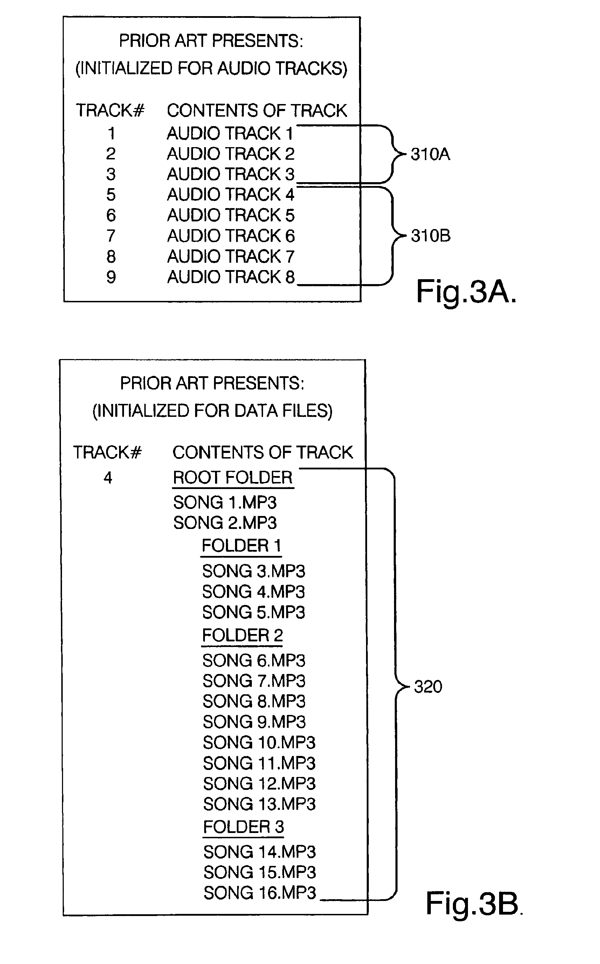

Referring to **FIG. 3A,** a prior art example is presented of a CD player set to an audio track playing mode of the contents of the CD of FIG. 2. In this example, typical of a current system, all CD contents of FIG. 2 are physically present on the CD but the CD player is initialized to access and display only the audio tracks to an operator of the CD player. While audio tracks 1-3 denoted as audio tracks 310A (assigned to disc tracks 1-3) and audio tracks 4-8 denoted as audio tracks 310B (assigned to disc track 5-9) are displayed, data track 4 (assigned to disc track 4) is absent from the display, as can be observed.

**FIG. 3B** shows a prior art example of a CD player set to a data file playing mode of the contents of the CD of FIG. 2. In this example, typical of a current system, all CD contents of FIG. 2 are physically present on the CD but the CD player is initialized to access and display only the data files to an operator of the CD player. While data track 4 denoted as data track 320 including root folder, folder 1, folder 2 and folder 3 (containing songs 1-16) are displayed, audio tracks 1-3 and audio tracks 4-8 are absent from the display, as can be observed.

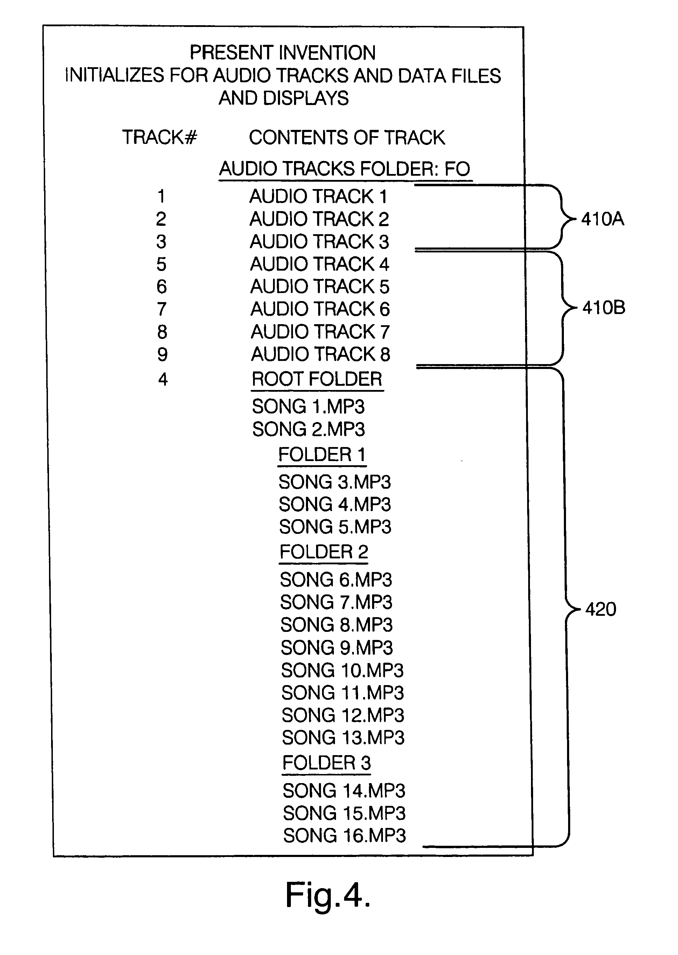

**FIG. 4** is a diagrammatic view illustrating the CD contents of FIG. 2 as displayed to an operator of a CD player, in an embodiment of the present invention. The file structures of the CD and the CD contents are read including audio track information and data file information, following disc presentation to a CD player. As used herein, disc presentation to a CD player means the moment when a CD player is directed to read a disc (not merely held and positioned within a CD player). The CD player is initialized to prepare it to sequentially access, and optionally play audio format and data format (in either order), without having to reinitialize the CD player when changing between the audio and data formats.

Upon reading the CD and initializing, audio track information 410A/410B and data file information 420 is concurrently obtained and displayed including track format, location of a track, length of a track and number of tracks. Information about a CD-DA track can further be displayed and includes folder name, track number, elapsed playing time, remaining time of the current track, number of tracks left, time remaining on the CD, album name, and artist name. Information about an MP3 data file can further be displayed and includes ID3 tag information, folder name, file name, file number, total number of files, elapsed playing time, artist name, CODEC information, and remaining time of the current file. The CD is therefore unambiguous to read and navigate as compared to present systems.

Both the audio contents and the data contents of the disc are located, accessed and displayed upfront without having to perform a mode change. A seamless interface is provided between audio files 410A/410B and data files 420 stored on the compact disc of FIG. 1. A mode change button is often used by current systems to change from audio tracks to data files. Additionally, some CD players are not equipped with a mode change button and thus only read one of MP3 files or audio files, leaving no choice to the operator of the CD player. As provided by the present invention, an operator of a CD player can switch between audio format and MP3 format modes (or another compressed audio format) when playing mixed-mode CDs, without having to manually engage a mode change button. Further, audio time delay, which is a consequence of a CD having to reinitialize when switching format modes, is essentially eliminated when switching between audio and data formats.

In an embodiment, by default setting, a CD player plays audio tracks prior to playing data files. By employing such a default, the CD player is allotted additional time to read and display additional or optional ID3 tag information (i.e., releasing year, cover art, etc.) associated with the data files, thereby minimizing any delay in beginning the play of audio files. That is, numerous CD players are capable of spinning CDs faster than required to read and play audio tracks for improved data transfer rate, and therefore the CD player can proceed ahead to read the additional or optional ID3 tag information while playing audio files. Sufficient buffer memory should be employed such that the CD player can read the ID3 tags while music continues to play from the buffer memory.

The present invention additionally enables an operator of a CD player to direct the CD player to randomize the order of play of both the audio tracks 410A/410B and the data files 420 on the single CD. Folders containing data files and audio files can be randomized with one entry, rather than having to change modes and reinitialize between audio and data files. Audio tracks and data files are randomized in various orders including having all contents on a CD played once in random order and having all contents in a selected folder played in random order.

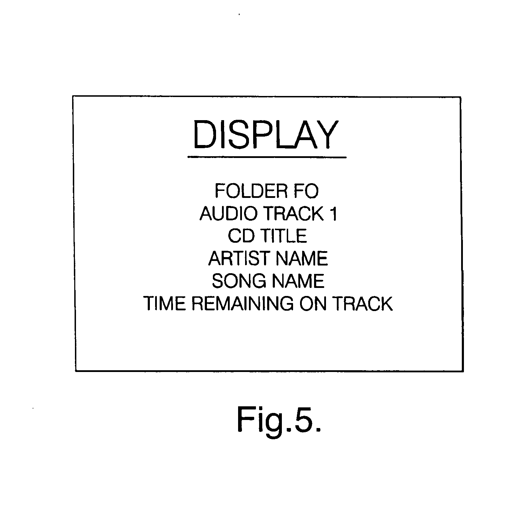

As illustrated in **FIG. 5,** in an embodiment of the present invention, audio tracks are incorporated into a folder structure for display purposes of audio file information, comparable to data files. The audio tracks can be incorporated into an existing folder, a root folder, a newly-created folder, a folder with data files, a folder without data files, or a combination thereof. As an example, Fig. 4 shows audio tracks 410A and 410B incorporated into audio tracks folder FO. As a further example where audio tracks are situated in one folder and data files are situated in a different folder, an operator of a CD player, when wishing to manually change between audio and data formats, is only required to switch folders, rather than having to engage a mode change button and reinitialize for a different file structure. It is to be appreciated that some players of storage media use the term "folder" and others use the term "group." Further, among various players of storage media, a file is analogous to a track on an audio CD, and a group is a bundle of files and is analogous to an album or folder.

Other features and advantages of this invention will be apparent to a person of skill in the art who studies this disclosure. Thus, exemplary embodiments, modifications and variations may be made to the disclosed embodiments while remaining within the spirit and scope of the invention as defined by the appended claims.

## Claims

1. A method of accessing a mixed mode storage medium (100) having both audio format (210) and data format (220) comprising:
reading medium contents including audio file format (210) and data file format (220) following disc presentation to a media player; and
initializing the media player to prepare the media player to sequentially access one of audio format (210) followed by data format (220) and data format (220) followed by audio format (210), without having to reinitialize the media player when changing between the audio format (210) and the data format (220).

2. The method of accessing a mixed mode storage medium (100) as in claim 1, wherein reading medium contents comprises determining the track format, location of a track, length of a track and number of tracks for the audio file format (210) and the data file format (220).

3. The method of accessing a mixed mode storage medium (100) as in claim 2, wherein reading medium contents further includes reading ID3 tag information associated with the data file format (220), and reading audio file information associated with the audio file format (210).

4. The method of accessing a mixed mode storage medium (100) as in claim 1, further comprising situating audio track files (210) and data files (220) into a folder structure to display audio track file information and data file information to an operator of the media player.

5. The method of accessing a mixed mode storage medium (100) as in claim 4, further comprising situating a first set of audio track files (210) into a folder with data files (220), and situating a second set of audio track files (210) into a folder without data files (220).

6. The method of accessing a mixed mode storage medium (100) as in claim 4, further comprising directing the media player to randomize the order of play of the audio tracks (210) and data files (220).

7. The method of accessing a mixed mode storage medium (100) as in claim 1, wherein the audio files (210) include CD-DA, wherein the data files (220) comprise a compressed audio format including one of MP3, MP3Pro, WMA, AAC, ATRAC, and Ogg-Vorbis, and wherein the medium is one of a CD, DVD, hard drive, mini disc, and digital tape.

8. The method of accessing a mixed mode storage medium (100) as in claim 1, wherein the media player is one of a compact disc player, a DVD player and a personal computer.

9. A method of accessing a mixed mode compact disc (100) having both audio format (210) and data format (220) comprising:
reading compact disc contents including audio file format (210) and data file format (220) following disc presentation to a compact disc player; and
initializing the compact disc player to prepare the compact disc player to sequentially access one of audio format (210) followed by data format (220) and data format (220) followed by audio format (210), without having to reinitialize the compact disc player when changing between the audio format (210) and the data format (220).

10. The method of accessing a mixed mode compact disc (100) as in claim 9, wherein reading compact disc contents comprises determining the track format, location of a track, length of a track and number of tracks for the audio file format (210) and the data file format (220).

11. The method of accessing a mixed mode compact disc (100) as in claim 10, wherein reading compact disc contents further includes reading ID3 tag information associated with the data file format (220), and reading audio file information associated with the audio file format (210).

12. The method of accessing a mixed mode compact disc (100) as in claim 9, further comprising situating audio track files (210) and data files (220) into a folder structure to display audio track file information and data file information to an operator of the compact disc player.

13. The method of accessing a mixed mode compact disc (100) as in claim 12, further comprising situating a first set of audio track files (210) into a folder with data files (220), and situating a second set of audio track files (210) into a folder without data files (220).

14. The method of accessing a mixed mode compact disc (100) as in claim 12, further comprising directing the compact disc player to randomize the order of play of the audio tracks (210) and data files (220).

15. The method of accessing a mixed mode compact disc (100) as in claim 9, wherein the audio files (210) include CD-DA, and wherein the data files (220) comprise a compressed audio format including one of MP3, MP3Pro, WMA, AAC, ATRAC, and Ogg-Vorbis.

16. A method of arranging files having different formats on a mixed mode medium (100) comprising situating audio track files (210) and data files (220) into a folder structure to display audio track file information and data file information to an operator of a media player, without having to reinitialize the media player.

17. The method of arranging files as in claim 16, further comprising situating a first set of audio track files (210) into a folder with data files (220), and situating a second set of audio track files (210) into a folder without data files (220).

18. The method of arranging files as in claim 16, further comprising directing the media player to randomize the order of play of the audio tracks (210) and data files (220).

19. The method of arranging files as in claim 16, wherein the audio files (210) include CD-DA, wherein the data files (220) comprise a compressed audio format including one of MP3, WMA, AAC, MP3Pro, ATRAC, and Ogg-Vorbis, and wherein the medium is one of a CD, DVD, hard drive, mini disc, and digital tape.

20. The method of arranging files as in claim 16, wherein the media player is one of a compact disc player, a DVD player and a personal computer.
